# EUROPÄISCHE PATENTSCHRIFT

(11) **EP 4 007 226 B1**
(45) Veröffentlichungstag und Bekanntmachung des Hinweises auf die Patenterteilung: **04.09.2024**
(21) Anmeldenummer: 20210332.1
(22) Anmeldetag: 27.11.2020
(51) Int. Cl.: H04L 47/2441, H04L 47/2425, G06F 12/08, H04L 12/46

(54) **VERFAHREN UND TELEKOMMUNIKATIONSSYSTEM ZUM HIERARCHISCHEN SPEICHERN VON DATENVERBINDUNGS-INFORMATIONEN IN NETZKNOTEN EINES MOBILFUNKNETZES**
METHOD AND TELECOMMUNICATION SYSTEM FOR HIERARCHICAL STORAGE OF DATA CONNECTION INFORMATION AND NETWORK NODE OF A MOBILE CELLULAR NETWORK
PROCÉDÉ ET SYSTÈME DE TELECOMMUNICATIONS POUR LA MÉMORISATION HIÉRARCHIQUE DES INFORMATIONS DES CIRCUITS DE DONNÉES ET NOEUD DE RÉSEAU D'UN RÉSEAU MOBILE RADIO

(43) Veröffentlichungstag der Anmeldung: 01.06.2022
(73) Patentinhaber: Deutsche Telekom AG, 53113 Bonn (DE)
(72) Erfinder: Bertram, Gabriel, 50969 Köln (DE)
(74) Vertreter: Blumbach · Zinngrebe Patentanwälte PartG mbB

(56) Entgegenhaltungen:
- EP-A1- 3 162 020
- EP-B1- 3 162 020
- US-A1- 2017 359 265

## Beschreibung

Die Erfindung betrifft ein Verfahren sowie ein Telekommunikationssystem zum hierarchischen Speichern von Datenverbindungs-Informationen in Netzknoten eines Mobilfunknetzes.

Bekannt ist, dass Datenpakete unter Anwendung des GPRS (General Packet Radio Service) -Tunnelprotokolls, kurz GTP-Protokoll genannt, über mobile Datenverbindungen eines Mobilfunknetzes übertragen werden können. Bevor jedoch Daten zwischen einem Endgerät und einem Ziel übertragen werden können, werden zunächst Datenverbindungen, die auch als GTP-Kontexte bekannt sind, aufgebaut. Die zu den Datenverbindungen gehörenden GTP-Kontextinformationen werden in verschiedenen Netzknoten des Mobilfunknetzes, welche an der Datenübertragung beteiligt sind, gespeichert. Bei einem Mobilfunknetz gemäß dem 2G-oder 3G-Mobilfunkstandard kann es sich hierbei um GPRS-Unterstützungsnetzknoten, wie zum Beispiel SGSN (Serving GPRS Support Nodes) -Netzknoten und GGSN (Gateway GPRS Support Nodes) -Netzknoten handeln, während die GPRS-Unterstützungsknoten eines Mobilfunknetzes gemäß dem 4G-Mobilfunkstandard sogenannte P-GW (Packet Data Network Gateway) -Netzknoten und S-GW (Serving Gateway) -Netzknoten sind. Erwähnt sei, dass die oben aufgeführten Netzknoten eines Mobilfunknetzes logisch oder physikalisch voneinander getrennt implementiert sein können. Am Rande sei noch erwähnt, dass der 2G-Mobilfunkstandard auch als GSM (Global System For Mobile Communications) -Standard bekannt ist, der 3G-Mobilfunkstandard als UMTS (Universal Mobile Telecommunications Systems) -Standard bekannt ist, und der 4G-Mobilfunkstandard als LTE (Long Term Evolution) Mobilfunkstandard bekannt ist. Neben den erwähnten GPRS-Unterstützungs-Netzknoten können in eine aufgebaute GTP Datenverbindung auch Firewalls eingebunden werden, welche den Nutzdatenverkehr untersuchen und steuern. Auch in den Firewalls können die GTP-Kontextinformationen gespeichert werden.

Bei dem GTP-Protokoll handelt es sich um ein IP-basiertes Tunnel-Protokoll. Das GTP-Protokoll kann in ein GTP-C-Transportprotokoll zum Transportieren von Kontrollinformationen, die beispielsweise zum Auf- und Abbau eines Tunnels benötigt werden, und in ein GTP-U-Transportprotokoll zur Übertragung von Nutzdaten zwischen einem Endgerät und einer Zieleinrichtung unterteilt werden. Mithilfe des GTP-C-Protokolls werden beim Aufbau einer Datenverbindung entsprechende Steuerungsinformationen zwischen einem Endgerät und den beteiligten Netzknoten des Mobilfunknetzes ausgetauscht. Die Steuerungsinformationen werden dann von den beteiligten Netzknoten des Mobilfunknetzes bearbeitet, wobei für jede Datenverbindung zumindest einige der in einer Steuerungsinformation enthaltenen Informationen zusammen mit einer Tunnel-ID als sogenannte GTP-Kontextinformationen in den beteiligten Netznoten und, wenn vorhanden, auch in einer Firewall gespeichert werden. Die GTP-Kontextinformationen werden von den Netzknoten so lange benötigt, wie Nutzdaten über die aufgebaute Datenverbindung zwischen einem Endgerät und einem Ziel ausgetauscht werden. Werden zwischen Endgerät und Ziel keine Daten mehr übertragen, so kann das Endgerät einen Verbindungsabbau, einen sogenannten GTP-Kontextabbau initiieren, der bewirkt, dass die in den Netzknoten gespeicherten Kontextinformationen gelöscht und somit die verwendeten Ressourcen wieder freigegeben werden.

Will ein Endgerät Nutzdatenpakete über das Mobilfunknetz übertragen, wird vom Endgerät in jedes zu übertragende Nutzdatenpaket die Tunnel-ID eingefügt, die zuvor dem aufgebauten Tunnel zugeordnet worden ist. Dies geschieht dadurch, dass in den GTP-U-Header eines jeden Nutzdatenpakets die Tunnel-ID eingefügt wird. Die beteiligten Netzknoten des Mobilfunknetzes und, wenn vorhanden, die eingebundenen Firewalls prüfen dann für jedes empfangene Nutzdatenpaket die im jeweiligen GTP-U-Header enthaltene Tunnel ID gegen eine Liste der gespeicherten GTP-Kontextinformationen so lange, bis die in einem GTP-U-Header enthaltene Tunnel ID mit der Tunnel ID einer gespeicherten GTP-Kontextinformation übereinstimmt. Da die Liste der gespeicherten GTP-Kontextinformationen bei jedem empfangenen Nutzdatenpaket kontinuierlich von oben nach unten abgearbeitet wird, steigt die Ressourcenbelastung der beteiligten Netzknoten mit zunehmender Anzahl an Datenverbindungen, d.h. GTP-Kontextinformationen, und mit wachsender Anzahl an Nutzdatenpaketen. Hierdurch kann die Bandbreite und Latenz von mobilen Datenverbindungen spürbar beeinträchtigt werden.

Aus der US 2017/0359265 A1 ist ein mobiles Kernnetzwerk mit Netzwerkelementen bekannt. Ein an einem Netzwerkelement ankommendes Paket, das einer Datenverbindung (flow) zugeordnet ist, wird daraufhin geprüft, ob in einem Zwischenspeicher des Netzwerkelements für die Datenverbindung ein Eintrag, der eine Klassifikation der Datenverbindung enthält, gespeichert ist. Wenn nicht, wird das Paket über einen vordefinierten Pfad einer Klassifizierungs-Dienstfunktion zugeführt, die die Datenverbindung klassifiziert, in dem ihr eine Dienstpfad-Kennung (SPI von Service Path Identifier) zugeordnet wird.

Aus der EP 3 1162 020 A1 ist ein Verfahren und eine Vorrichtung zur Optimierung eines getunnelten Datenverkehrs bekannt. Als Tunnel-Protokoll wird das GTP (General Packet Radio Service (GPRS) Tunneling Protocol) angewendet.

Der Erfindung liegt daher die Aufgabe zugrunde, ein Verfahren und ein Telekommunikationssystem bereitzustellen, welche ermöglichen, die Ressourcenbelastung von Netzknoten eines Mobilfunknetzes bei der Übertragung von Nutzdatenpaketen über IP-basierte Tunnelverbindungen zu reduzieren, um die oben genannte Nachteile vermeiden zu können.

Ein Kerngedanke der Erfindung kann dann gesehen werden, ein Verfahren sowie ein Telekommunikationssystem zum hierarchischen Speichern von Datenverbindungs-Informationen in Netzknoten eines Mobilfunknetzes zur Verfügung zu stellen. Gemäß der beanspruchten Erfindung werden die Datenverbindungs-Informationen in Abhängigkeit von der ihnen jeweils zugeordneten Datenverkehrsklasse hierarchisch gespeichert. Gemäß einem weiteren vorteilhaften Aspekt, kann die hierarchische Speicherung der Datenverbindungs-Informationen dynamisch zum Beispiel an die aktuelle Datenlast der jeweiligen laufenden Datenverbindungen angepasst werden.

Die Erfindung ist definiert durch die unabhängigen Ansprüche. Die abhängigen Ansprüche beschreiben weitere Ausführungsformen der Erfindung.

Die Erfindung wird nachfolgend anhand eines Ausführungsbeispiels in Verbindung mit den beiliegenden Zeichnungen näher erläutert. Darin zeigen:
- Figur 1: ein beispielhaftes Telekommunikationssystem, in dem die Erfindung verwirklicht ist,
- Figur 2: ein Diagramm, welches den zeitlichen Ablauf eines GTP-Verbindungsaufbaus mit anschließender Nutzdatenübertragung zeigt, und
- Figur 3: eine beispielhafte Darstellung, wie Datenverbindungs-Informationen in einer Speichereinrichtung der in Figur 1 gezeigten Netzknoten in Tabellen unterschiedlicher Priorität hierarchisch gespeichert und durchsucht werden können.

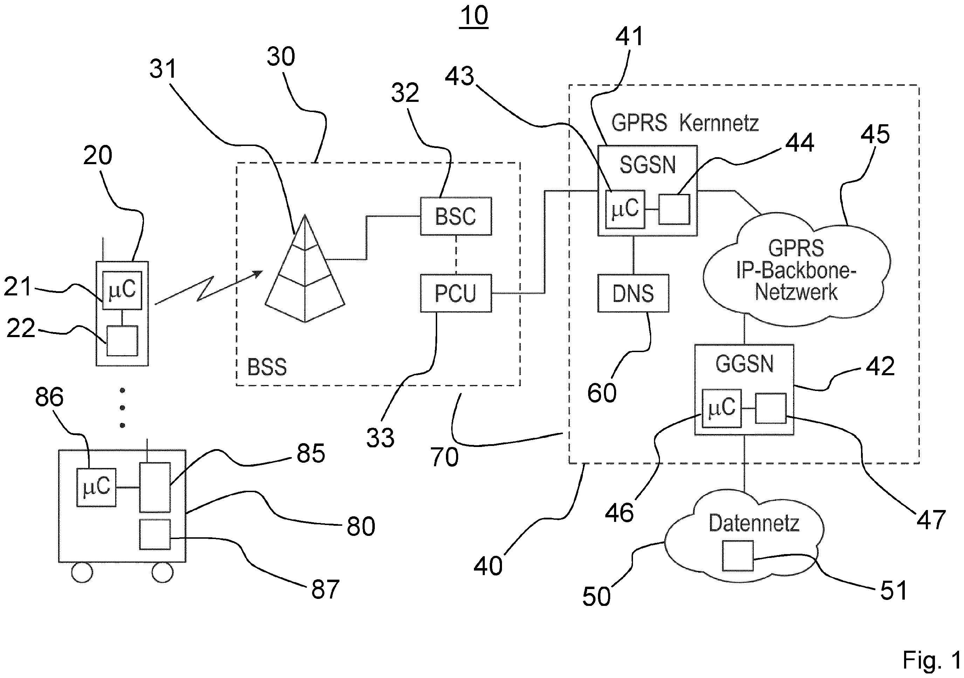

In Figur 1 ist ausschnittsweise ein beispielhaftes Telekommunikationssystem 10 dargestellt. Das beispielhafte Telekommunikationssystem 10 kann ein Mobilfunknetz 70 umfassen, welches ein Kernnetz 40 mit wenigstens einem ersten Netzknoten 41 und wenigstens einem zweiten Netzknoten 42 aufweisen kann. Das Mobilfunknetz 70 ist insbesondere zur Übertragung von Datenpaketen gemäß einem IP-basierten Tunnel-Protokoll ausgebildet ist. Das Kernnetz 40 ist ein paketvermittelndes Netzwerk, beispielsweise ein GPRS (General Packet Radio Service) -basiertes Kernnetz. Die Netzknoten 41 und 42 können in an sich bekannter Weise über ein GPRS-basiertes IP-Backbone-Netzwerk 45 miteinander verbunden sein. Weiterhin kann das Telekommunikationssystem 10 wenigstens ein Mobilfunk-fähiges Gerät 20, welches eine Steuereinrichtung 21 und eine Speichereinrichtung 22, in der wenigstens eine Information zum Identifizieren einer von mehreren vorbestimmten Datenverkehrsklassen und ein IP-basiertes Tunnel-Protokoll gespeichert werden können, aufweisen. Die Steuereinrichtung 21 kann ein Mikrocontroller sein. Unter einem Mobilfunk-fähigen Gerät ist vorzugsweise ein Gerät zu verstehen, welches u.a. eine Mobilfunk-Schnittstelle aufweist, mit der das Gerät über das Mobilfunknetz 70 mit einer Zieleinrichtung kommunizieren kann.

Bei dem IP-basierten Tunnel-Protokoll handelt es sich beispielsweise um das GPRS-Tunnel-Protokoll, nachfolgend nur kurz GTP-Protokoll genannt. In der Praxis werden eine Vielzahl von Mobilfunk-fähigen Geräten, wie zum Beispiel ein weiteres Mobilfunk-fähiges Gerät 80, zum Telekommunikationssystem 10 gehören. Das wenigstens eine Mobilfunk-fähige Gerät 20 kann dazu ausgebildet sein, unter Ausführung des IP-basierten Tunnel-Protokolls eine Datenverbindungsaufbau-Nachricht zum Aufbauen einer Datenverbindung über das Mobilfunknetz 70 zu einer mit dem Mobilfunknetz 70 verbindbaren Zieleinrichtung 50, 51 bereitzustellen bzw. zu erzeugen und in das Kernnetz 70 zu übertragen. Die Datenverbindungsaufbau-Nachricht enthält die wenigstens eine Information zum Identifizieren einer der mehreren vorbestimmten Datenverkehrsklassen. Das Kernnetz 70 kann dazu ausgebildet sein,
- unter Ansprechen auf eine von dem wenigstens einen Mobilfunk-fähigen Gerät 20 empfangene Datenverbindungsaufbau-Nachricht eine IP-basierte Tunnelverbindung zwischen dem ersten, dem wenigstens einen Mobilfunk-fähigen Gerät 20 zugeordneten Netzknoten 41 und dem zweiten, der Zieleinrichtung 50, 51 zugeordneten Netzknoten 42 aufzubauen,
- der aufgebauten IP-basierten Tunnelverbindung eine eindeutige Tunnel-Kennung zuzuordnen, und
- die eindeutige Tunnel-Kennung zu dem wenigstens einen Mobilfunk-fähigen Gerät 20 zu übertragen, welches die Tunnel-Kennung zum Beispiel in der Speichereinrichtung 22 ablegen kann.

Angemerkt sei an dieser Stelle, dass das weitere Mobilfunk-fähige Gerät 80 ähnlich wie das Mobilfunk-fähige Gerät 20 aufgebaut sein kann und im Wesentlichen die gleichen Funktionen ausführen kann. Lediglich der einfachen Darstellung und Erläuterung wegen sind lediglich die beiden Mobilfunk-fähigen Gerät 20 und 80 gezeigt. Die Mobilfunk-fähigen Geräte 20 und 80 können beispielsweise ein tragbares Mobilfunkgerät, wie zum Beispiel ein Smartphone oder ein Tablet-Rechner, ein IoT (Internet of Things) -Gerät, oder ein Mobilfunk-fähiger, bei einem Kunden aufgestellter Router, an den wiederum zum Beispiel ein PC angeschlossen sein kann, oder auch ein Kraftfahrzeug mit einer integrierten Mobilfunk-fähigen Schnittstelle sein. IoT-Geräte können Sensoren, wie zum Beispiel Rauch- oder Strommelder und dergleichen sein. Im vorliegenden Beispiel sei angenommen, dass das Mobilfunk-fähige Gerät 20 ein Smartphone ist, während das Mobilfunk-fähige Gerät 80 ein Kraftfahrzeug mit einer Mobilfunk-fähigen Schnittstelle 85 ist, mit der zum Beispiel eine Maschine-zu-Maschine-Kommunikation über das Mobilfunknetz 70 möglich ist.

In der Speichereinrichtung 22 des Mobilfunk-fähigen Geräts 20 kann ferner eine Firmware abgespeichert sein, die, wenn sie von der Steuereinrichtung 21 ausgeführt wird, das Mobilfunk-fähige Gerät 20 steuert und überwacht. In ähnlicher Weise kann im Kraftfahrzeug 80 eine Steuereinrichtung 86 und Speichereinrichtung 87 implementiert sein. In der Speichereinrichtung 87 kann wenigstens eine Information zum Identifizieren einer von mehreren vorbestimmten Datenverkehrsklassen, ein IP-basiertes Tunnel-Protokoll und eine Firmware abgespeichert sein. Firmware kann, wenn sie von der Steuereinrichtung 86 ausgeführt wird, zumindest die Mobilfunk-fähige Schnittstelle 85 Gerät 20 steuern und überwachen, Wie nachfolgend noch näher ausgeführt, kann in der Speichereinrichtung 22 und in der Speichereinrichtung 87 auch eine Tunnel-Kennung bzw. eine Tunnel ID abgespeichert werden, die während einer laufenden Datenverbindung zwischen dem Mobilfunk-fähigen Gerät 20 und einem Ziel, beispielsweise dem Datennetz 50, bzw. während einer laufenden Datenverbindung zwischen dem Kraftfahrzeug 80 und einem Ziel, beispielsweise das Datennetz 50, gültig ist.

Die Zieleinrichtung kann ein extern an das Kernnetz 40 anschaltbares Datennetz 50 sein, welches beispielsweise zumindest einen Anwendungsserver 51 enthalten kann. Das Datennetz 50 kann das Internet sein. Erwähnt sei an dieser Stelle, dass mehrere externe Datennetze (nicht dargestellt) an das Kernnetz 70 als weitere Zieleinrichtungen angeschlossen werden können.

Der wenigstens eine erste Netzknoten 41 und der wenigstens eine zweite Netzknoten 42 können jeweils eine Speichereinrichtung 44 bzw. 47 aufweisen und jeweils dazu ausgebildet sind,
- unter Auswertung der in einer empfangenen Datenverbindungsaufbau-Nachricht enthaltenen Identifizierungsinformation die der Datenverbindungsaufbau-Nachricht zugeordnete Datenverkehrsklasse zu ermitteln, und
- zumindest teilweise die Datenverbindungsaufbau-Nachricht zusammen mit der eindeutigen Tunnel-Kennung, die der aufgebauten IP-basierten Tunnelverbindung zugeordnet ist, als eine Datenverbindungs-Information in Abhängigkeit von der ermittelten Datenverkehrsklasse hierarchisch in der Speichereinrichtung 44 bzw. in der Speichereinrichtung 47 zu speichern. Bei dem erläuterten Ausführungsbeispiel kann die Datenverbindungs-Information auch als GTP-Kontextinformation bezeichnet werden. Anzumerken ist, dass eine Datenverbindungs-Information, im vorliegenden Beispiel auch GTP-Kontextinformation genannt, Informationen enthält, welche insbesondere einen bestimmten Tunnel bzw. eine bestimmte Tunnelverbindung betreffen.

In dem wenigstens einen Netzknoten 41 und in dem wenigstens einen zweiten Netzknoten 42 können ferner jeweils eine Steuereinrichtung 43 bzw. 46 implementiert sein. Die Steuereinrichtungen 43 und 46 können jeweils wiederum als Mikrocontroller ausgebildet sein. In der Speichereinrichtung 44 und in der Speichereinrichtung 47 kann ferner jeweils eine Firmware zur Steuerung und Überwachung des Netzknotens 41 bzw. des Netzknotens 42 hinterlegt sein. Darüber hinaus kann in den Speichereinrichtungen 44 und 47 jeweils ein IP-basiertes Tunnelprotokoll, vorzugsweise das GTP-Tunnelprotokoll abgelegt sein. Wie später noch ausführlich erläutert, werden in der Speichereinrichtung 44 des Netzknoten 41 und in der Speichereinrichtung 47 des Netzknoten 42 Datenverbindungs-Informationen, auch Kontextinformationen genannt, zu allen aktuell bestehenden Tunnelverbindungen, die zwischen dem Netzknoten 41 und dem Netzknoten 42 aufgebaut sind, abgespeichert, wobei jede Kontextinformation auch die der jeweiligen laufenden Tunnelverbindung zugeordnete eindeutige Tunnel ID enthält. Wie bereits oben erwähnt, kann das GPRS Kernnetz 40 mehrere Netzknoten 41 und mehrere Netzknoten 42 und gegebenenfalls auch Firewalls (nicht dargestellt) aufweisen.

Das Mobilfunknetz 70 kann gemäß einem Mobilfunkstandard aufgebaut sein, der neben einer paketvermittelnden Datenübertragung über das Kernnetz 40 auch für die Telefonie genutzt werden kann. Allerdings ist der Teil des Mobilfunknetzes 70, der für die Telefonie bestimmt ist, nicht dargestellt.

Das beispielhaft in Figur 1 gezeigte Mobilfunknetz 70 kann beispielsweise gemäß dem Universal Mobile Telecommunications System (UMTS)-Mobilfunkstandard, der auch als 3G-Mobilfunkstandard bekannt ist, implementiert sein. Das Mobilfunknetz 70 kann alternativ auch gemäß dem Global System For Mobile Communications (GSM)-Mobilfunkstandard, der als Mobilfunkstandard der zweiten Generation bekannt ist, implementiert sein. Das Mobilfunknetz 70 kann ferner beispielsweise gemäß dem Long Term Evolution (LTE)-Mobilfunkstandard, der auch als 4G-Mobilfunkstandard bekannt ist, oder auch gemäß dem 5G-Mobilfunkstandard aufgebaut sein. Gemäß dem 5G-Mobilfunkstandard wird auch das GTP Protokoll verwendet. Allerdings werden Kontroll- und Steuerinformationen nicht gemäß dem GTP-C-Protokoll, sondern als HTTPS Nachrichten übertragen.

Unabhängig von dem gewählten Mobilfunkstandard ist insbesondere wichtig, dass das Kernnetz 40 des Mobilfunknetzes 70 eine paketbasierte Datenübertragung zwischen einem Mobilfunk-fähigen Gerät, beispielsweise dem Smartphone 20, und einem Ziel, beispielsweise dem Anwendungsserver 51 des Datennetzes 50 ermöglicht. Zudem kann das Kernnetz 40 vorteilhafterweise dazu ausgebildet sein, Daten über Tunnelverbindungen, welche jeweils einem Endgerät, zum Beispiel den Mobilfunk-fähigen Geräte 20 und 80, zugeordnet sind, zu übertragen. Jeder Tunnelverbindung wird eine eindeutige Tunnel ID bzw. Tunnel-Kennung zugeordnet, die dem jeweiligen Endgerät mitgeteilt wird.

Das Mobilfunknetz 70 kann weiterhin ein drahtloses Zugangsnetz 30 aufweisen, über das die Mobilfunk-fähigen Geräte 20 und 80 beispielsweise mit dem Datennetz 50 kommunizieren können. Das drahtlose Zugangsnetz 30 kann beispielsweise als Mobilfunk-Teilsystem bzw. Base Station Subsystem (BSS) ausgebildet sein.

Das beispielhaft in Figur 1 dargestellte drahtlose Zugangsnetz 30 kann wenigstens eine Basisstation, auch als Base Transceiver Station (BTS) bezeichnet, sowie eine zentrale Steuerungseinheit, auch als Base Station Controller (BSC) bezeichnet, aufweisen. Um das Mobilfunknetz 70 auch für eine paketvermittelte Datenübertragung verwenden zu können, ist der zentralen Steuerungseinheit 32 eine Paket-Steuerungseinheit 33, auch Packet Control Unit (PCU) genannt, zugeordnet. Angemerkt sei an dieser Stelle, dass in der Praxis das Mobilfunknetz 70 mehrere Basisstationen 31, mehrere zentrale Steuerungseinheiten 32 und mehrere Paket-Steuerungseinheiten 33 aufweisen kann. Die wenigstens eine Basisstation 31 ist mit der zentralen Steuerungseinheit 32 verbunden, um über die Luftschnittstelle empfangene Datenpakete der zentralen Steuerungseinheit 32 bzw. der Paket-Steuerungseinheit 33 zur Weiterleitung über das Kernnetz 40 zuzuführen. Das drahtlose mobile Zugangsnetz 30 ist über die Paket-Steuerungseinheit 33 und den ersten Netzknoten 41 mit dem GPRS Kernnetz 40 verbunden. Das Datennetz 50 ist über den Netzknoten 42 mit dem Kernnetz 40 des Mobilfunknetzes 70 verbunden. Der erste Netzknoten 41 kann mit einem Domain Name Server (DNS) 60 verbunden sein, der Teil des GPRS Kernnetzes 40 sein kann. Der Domain Name Server 60 kann allerdings auch außerhalb des GPRS Kernnetzes 40 implementiert sein.

Ist das Mobilfunknetz 70, wie beispielhaft in Figur 1 dargestellt, gemäß dem 2G-oder 3G-Mobilfunkstandard implementiert, bilden die Netzknoten, hier die Netzknoten 41 und 42 GPRS-Unterstützungsnetzknoten, wobei der Netzknoten 41 beispielsweise als SGSN (Serving GPRS Support Nodes) -Netzknoten und der Netzknoten 42 als GGSN (Gateway GPRS Support Nodes) -Netzknoten ausgebildet sein kann. Ist das Mobilfunknetz 70 beispielsweise gemäß dem 4G-Mobilfunkstandard implementiert, so bilden die Netzknoten, hier die Netzknoten 41 und 42 GPRS-Unterstützungsnetzknoten, wobei der Netzknoten 42 als ein P-GW (Packet Data Network Gateway) -Netzknoten und der Netzknoten 41 als S-GW (Serving Gateway) -Netzknoten ausgebildet wären. Ein S-GW-Netzknoten ist auch als MME (Mobility Management Entity) -Netzknoten bekannt. Erwähnt sei, dass die oben aufgeführten Netzknoten des Kernnetzes 40 logisch oder, wie in Figur 1 gezeigt, physikalisch voneinander getrennt implementiert sein können.

Wie nachfolgend noch näher ausgeführt wird, wird, kann das Smartphone 20 dazu ausgebildet sein, unter Ausführung des GPRS Tunnel-Protokolls (GTP) beispielsweise den Aufbau einer GTP-Tunnelverbindung zwischen dem ersten Netzknoten 41 und dem zweiten Netzknoten 42 einzuleiten. Während einer bestehenden Datenverbindung zwischen dem Smartphone 20 und beispielsweise dem Datennetz 50 bleibt die GTP-Tunnelverbindung aufrechterhalten, auch wenn in Folge eines Roamings ein Basisstationswechsel stattfindet und das Smartphone 20 nicht mehr von der Basisstation 31, sondern von einer anderen, nicht dargestellten Basisstation versorgt wird.

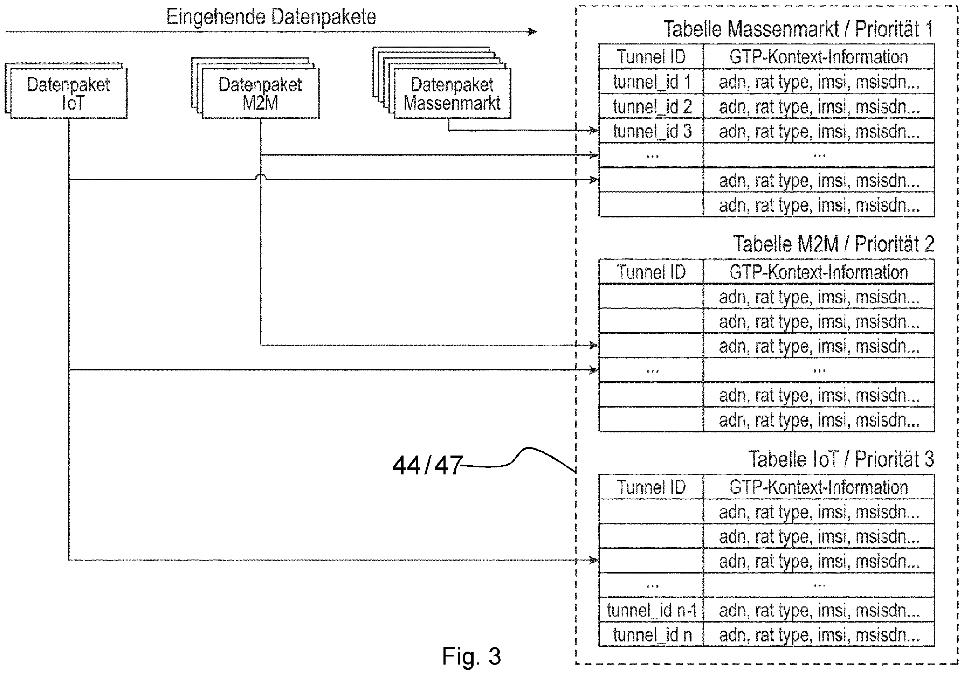

Jeder der vorbestimmten Datenverkehrsklassen kann eine unterschiedliche Datenlast zugeordnet sein, wobei die Datenlast vorzugsweise als Anzahl von Paketen pro Zeiteinheit definiert ist und das mittlere zu erwartende Verkehrsaufkommen wiedergibt. Vorzugsweise wird die jeder Datenverkehrsklasse zugeordnete Datenlast durch einen vorbestimmten Wert definiert, der einer mittleren, für die jeweilige Datenverkehrsklasse zu erwartenden Anzahl an zu übertragenden Datenpaketen pro Zeiteinheit, z.B. pro Sekunde, entspricht. Ferner kann den mehreren vorbestimmten Datenverkehrsklasse in dem wenigstens einen ersten Netzknoten 41 und in dem wenigstens einen zweiten Netzknoten 42 in Abhängigkeit von der ihnen zugeordneten Datenlast jeweils eine Speichertabelle mit entsprechender Priorität zugeordnet sein, und zwar vorzugsweise in steigender Reihenfolge derart, dass der Datenverkehrsklasse mit der niedrigsten zu erwartenden Datenlast die Speichertabelle mit der niedrigsten Priorität und der Datenverkehrsklasse mit der höchsten zu erwartenden Datenlast die Speichertabelle mit der höchsten Priorität zugeordnet ist. Der wenigstens eine erste Netzknoten 41 kann dazu ausgebildet sein, eine Datenverbindungs-Information in Abhängigkeit von der jeweils ermittelten Datenverkehrsklasse bzw. der der ermittelten Datenverkehrsklasse zugeordneten Datenlast in der entsprechend priorisierten Speichertabelle der Speichereinrichtung 44 zu speichern, wobei der wenigstens eine zweite Netzknoten 42 dazu ausgebildet sein kann, eine Datenverbindungs-Information in Abhängigkeit von der jeweils ermittelten Datenverkehrsklasse bzw. der der ermittelten Datenverkehrsklasse zugeordneten Datenlast in der entsprechend priorisierten Speichertabelle der Speichereinrichtung 47 zu speichern. Figur 3 zeigt beispielsweise drei Speichertabellen für drei unterschiedliche Datenverkehrsklassen. Um Datenverbindungs-Informationen in unterschiedlich priorisierten Speichertabellen hierarchisch speichern zu können, kann in den Netzknoten 41 und 42, vorzugsweise in den Speichereinrichtungen 44 und 47, beispielsweise jeweils eine Nachschlagetabelle hinterlegt werden. In jeder Nachschlagetabelle können die vorbestimmten Datenverkehrsklassen, die den vorbestimmten Datenverkehrsklassen jeweils zugeordneten vorbestimmten Datenlasten und/oder weitere Informationen, wie zum Beispiel Pointer, welche auf die entsprechend priorisierte Speichertabelle zeigen, gespeichert sein. Diese Informationen werden von den Netzknoten 41 und 42 jeweils benötigt, um Datenverbindungs-Informationen in Abhängigkeit von der jeweils ermittelten Datenverkehrsklasse hierarchisch, d.h. in der entsprechend priorisierten Speichertabelle, in der Speichereinrichtung 44 bzw. in der Speichereinrichtung 47 zu speichern.

Vorzugsweise kann das wenigstens eine Mobilfunk-fähige Gerät 20, aber auch das Mobilfunk-fähige Gerät 80, dazu ausgebildet sein, Nutzdatenpakete zur Übertragung über eine aufgebaute IP-basierte Tunnelverbindung bereitzustellen bzw. zu erzeugen, wobei in jedem Nutzdatenpaket die Tunnel-Kennung der IP-basierten Tunnelverbindung, über die die Übertragung des jeweiligen Nutzdatenpakets erfolgen soll, enthalten ist. Ferner können der wenigstens eine erste Netzknoten 41 und der wenigstens eine zweite Netzknoten 42 jeweils dazu ausgebildet sein, die in jedem empfangenen Nutzdatenpaket enthaltene Tunnel-Kennung auszulesen und die in der Speichereinrichtung 43 bzw. 47 hierarchisch gespeicherten Datenverbindungs-Informationen beginnend mit der Speichertabelle mit der höchsten Priorität solange zu durchsuchen, bis die in einer Datenverbindungs-Information enthaltene Tunnel-Kennung mit der im jeweiligen Nutzdatenpaket enthaltenen Tunnel-Kennung übereinstimmt.

Nachfolgend wird die Funktions- und Arbeitsweise des beispielhaften, in Figur 1 dargestellten Telekommunikationssystems insbesondere in Verbindung mit dem Mobilfunk-fähigen Gerät 20 näher erläutert. Allerdings können alle Erläuterungen betreffend das Mobilfunk-fähige Gerät 20 beispielsweise auch für das Mobilfunk-fähige Gerät 80 gelten.

Angenommen sei, dass vorab, beispielsweise von einem Betreiber des Mobilfunknetzes 70, mehrere verschiedene Datenverkehrsklassen festgelegt werden. Die Datenverkehrsklassen unterscheiden sich insbesondere durch das ihnen jeweils zugeordnete Verkehrsaufkommen bzw. durch die ihnen zugeordnete Datenlast, welche während einer bestehenden Datenverbindung im Mittel angenommen bzw. erwartet wird. Vorzugsweise wird die jeder Datenverkehrsklasse zugeordnete Datenlast durch einen vorbestimmten Wert definiert, der einer mittleren, für die jeweilige Datenverkehrsklasse zu erwartenden Anzahl an zu übertragenden Datenpaketen pro Zeiteinheit, z.B. pro Sekunde, entspricht.

Im Weiteren werden beispielhaft drei verschiedene Datenverkehrsklassen unterschieden:
i) Eine erste Datenverkehrsklasse, welche beispielsweise einer IoT (Internet-der-Dinge) -Kommunikation zugeordnet ist. Hierunter fallen beispielsweise Anwendungen wie Zählerstandübermittlungen, Status-Updates von technischen Systemen wie Strom- und Rauchmeldern. Eine IoT-Anwendung bzw. Kommunikation zeichnet sich durch eine sehr geringe Datenlast aus. Denn Zählerstände werden in der Regel nur wöchentlich oder monatlich übermittelt. Demzufolge wird der ersten Datenverkehrsklasse eine niedrige anzunehmende bzw. zu erwartende mittlere Datenlast zugeordnet ist.
ii) Eine zweite Datenverkehrsklasse, welche beispielsweise einer M2M (Maschine-zu-Maschine) -Kommunikation zugeordnet ist. Eine mögliche Anwendung sind Mobilfunkverbindungen, die über ein Mobilfunk-fähiges Fahrzeug, z.B. das in Figur 1 gezeigte Fahrzeug 80 eingeleitet werden. Solche und vergleichbare Anwendungsfälle sind in der Regel nur dann aktiv, wenn beispielsweise das Fahrzeug 80 aktiv ist. Somit wird kein dauerhaftes Datenverkehrs-Grundrauschen von dem Fahrzeug erzeugt. Zwar kann im aktiven Zustand eines Fahrzeugs die Datenlast erhöht sein, beispielsweise durch die Verwendung eines Navigationssystems. Im Mittel ist jedoch die der zweiten Datenverkehrsklasse zugeordnete anzunehmende bzw. zu erwartende mittlere Datenlast etwas höher als die Datenlast der ersten Datenverkehrsklasse.
iii) Eine dritte Datenverkehrsklasse, welche beispielsweise einem klassischen Konsumentendatenverkehr oder Massenmarktdatenverkehr zugeordnet ist. Einem solchen Massendatenverkehr, der beispielsweise von Smartphones oder Tablets erzeugt wird, ist die höchste anzunehmende bzw. zu erwartende mittlere Datenlast zugeordnet. Anwendungen betreffen insbesondere den Internetverkehr wie zum Beispiel Website-Zugriffe, VoIP- oder Streaming- oder Social Media-Dienste, die von Endgeräten, wie beispielsweise dem Smartphone 20 oder Tabletts genutzt werden. Solche Anwendungen benötigen vorzugsweise mobile Datenverbindungen, die in der Regel dauerhaft oder über einen längeren Zeitraum aktiv sind. Datenverbindungen der dritten Datenverkehrsklasse können ein hohes Hintergrundrauschen an Datenverkehr, welches durch Updates, Messenger- oder standortbezogene Dienste hervorgerufen wird, erzeugen. Demzufolge wird der dritten Datenverkehrsklasse die höchste zu erwartende Datenlast zugeordnet.

Die den Datenverkehrsklassen zugeordnete Datenlasten können als Schwellenwerte in den Speichereinrichtungen 44 und 47 der Netzknoten 41 und 42 zur weiteren Verwendung abgespeichert werden. Insbesondere können diese Schwellenwerte zum dynamischen Verschieben der in den unterschiedlich priorisierten Speichertabellen gespeicherten Datenverbindungs-Informationen verwendet werden.

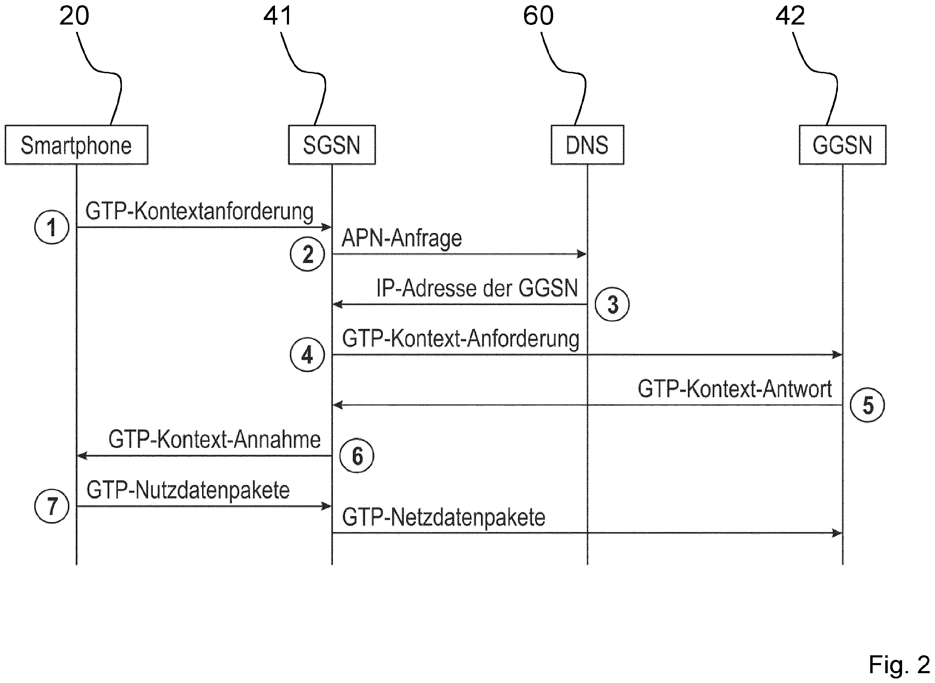

Nunmehr wird auf Figur 2 Bezug genommen. Das Smartphone 20 kann dazu ausgebildet sein, zunächst unter Ausführung des IP-basierten Tunnel-Protokolls eine Datenverbindungsaufbau-Nachricht, in Figur 2 auch GTP-Kontextanforderung genannt, zum Aufbauen einer Datenverbindung über das Mobilfunknetz 70 beispielsweise zu dem mit dem Mobilfunknetz 70 verbundenen Datennetz zu erzeugen bzw. bereitzustellen. Das IP-basierte Tunnel-Protokoll ist im vorliegenden Fall des GTP-Protokoll. Die bereitgestellte Datenverbindungsaufbau-Nachricht enthält wenigstens eine, im Mobilfunk-fähigen Gerät 20 gespeicherte Information zum Identifizieren einer der mehreren Datenverkehrsklassen, welche vorzugsweise das zu erwartende Verkehrsaufkommen des Smartphone 20 widerspiegelt. Im vorliegenden Beispiel sind das die drei oben beispielhaft erläuterten Datenverkehrsklassen. Die Information zum Identifizieren einer der drei Datenverkehrsklassen kann einen Zugangspunkt-Namen, auch Access Point Name (APN) genannt, enthalten, der zum Beispiel den zweiten Netzknoten 42, d.i. beispielsweise der GGSN-Netzknoten in Figur 1, benennt, über den das Smartphone 20 eine Datenverbindung zum Datennetz 50 aufbauen möchte. Darüber hinaus kann die Information zum Identifizieren einer der mehreren Datenverkehrsklassen alternativ oder zusätzlich eine internationale Mobilfunk-Teilnehmerkennung, auch International Mobile Subscriber Identity (IMSI) genannt) und /oder eine Mobilfunk-Rufnummer, auch Mobile Subscriber Integrated Services Digital Network Number (MSISDN) genannt enthalten. Aus der Mobilfunk-Teilnehmerkennung IMSI kann beispielsweise auf das Endgerät geschlossen werden, welches die Datenverbindungsaufbau-Nachricht erzeugt hat. So könnte eine IMSI-Teilnehmerkennung beispielsweise darauf hinweisen, dass das Mobilfunk-fähige Gerät ein Smartphone, oder ein Strom- oder Rauchmelder oder ein Fahrzeug mit einer integrierten Mobilfunkschnittstelle ist. Als eine Information zum Identifizieren einer der drei beispielhaften Datenverkehrsklassen kann beispielsweise auch der Typ einer drahtlosen Zugangstechnologie, auch Radio Access Technologie (RAT) -Type genannt, dienen. Auch aus dieser Information kann die für das jeweilige Mobilfunk-fähige Gerät relevante Datenverkehrsklasse ermittelt werden. So wird beispielsweise für eine IoT-Anwendung ein eindeutiger RAT-Typ in der Datenverbindungsaufbau-Nachricht verwendet.

Bei dem betrachteten Ausführungsbeispiel sei angenommen, dass der in der vom Smartphone 20 erzeugten Datenverbindungsaufbau-Nachricht enthaltene Zugangspunkt-Name den GGSN-Netzknoten 42 referenziert und gleichzeitig darauf hinweist, dass das Mobilfunk-fähige Gerät 20 ein Smartphone ist. Die vom Smartphone 20 angeforderte mobile Datenverbindung wird also dritten Datenverkehrsklasse zugeordnet, denn es wird erwartet, dass über diese Datenverbindung Daten mit der höchsten Datenlast übertragen werden. Diese Datenverbindungsaufbau-Nachricht wird nunmehr in Schritt 1 vom Smartphone 20 über das drahtlose Zugangsnetz 30 zum SGSN-Netzknoten 41des GPRS Kernnetzes 40 übertragen. Gemäß dem betrachteten Ausführungsbeispiel ist der SGSN-Netzknoten 41 dazu ausgebildet, den Zugangspunkt-Namen aus der empfangenen Datenverbindungsaufbau-Nachricht auszulesen und in Schritt 2 eine entsprechende APN-Anfrage an den Domainname Server 60 zu richten. Der Domainname Server 60 ist in an sich bekannter Weise dazu ausgebildet, die IP-Adresse, die der APN-Anfrage zugeordnet ist, herauszufinden. Im vorliegenden Beispiel ist das die IP-Adresse des GGSN-Netzknoten 42. Der Domain Name Server 60 sendet dann in Schritt 3 die IP-Adresse des Netzknotens 42 zum SGSN-Netzknoten 41. Unter Verwendung der empfangenen IP-Adresse sendet der SGSN-Netzknoten 41 die vom Smartphone 20 empfangene Datenverbindungsaufbau-Nachricht, d.i. die GTP-Kontextanforderung, in Schritt 4 weiter zum GGSN-Netzknoten 42. In Schritt 5 überträgt der GGSN-Netzknoten 42 eine GTP-Kontextantwort zum SGSN-Netzknoten 41. Je nach Implementierung kann beispielsweise das Kernnetz 40, und insbesondere der SGSN-Netzknoten 41 und/oder der GGSN-Netzknoten 42 während der Ausführung der Schritte 4 und 5 unter Ansprechen auf die empfangene GTP-Kontextanforderung des Smartphones 20 eine IP-basierte Tunnelverbindung zwischen dem SGSN-Netzknoten 41 und dem GGSN-Netzknoten 42 über das IP-Backbone Netzwerk 45 aufbauen. Im vorliegenden Beispiel wird somit zwischen dem SGSN-Netzknoten 41 und dem GGSN-Netzknoten 42 eine GTP-Tunnelverbindung, welche dem Smartphone 20 zugeordnet ist, aufgebaut. Ferner ordnet das GPRS Kernnetz 40 und insbesondere der SGSN-Netzknoten 41 und/oder der GGSN-Netzknoten 42 der zwischen dem Netzknoten 41 und dem Netzknoten 42 aufgebauten GtP-Tunnelverbindung eine eindeutige Tunnel ID zu. Dies kann beispielsweise dadurch erreicht werden, dass der GGSN-Netzknoten 42 unter Ansprechen auf die vom SGSN-Netzknoten 41 empfangene GTP-Kontextanforderung eine entsprechende eindeutige Tunnel ID erzeugt und diese in der GTP-Kontextantwort in Schritt 5 zum SGSN-Netzknoten 41 überträgt. Der SGSN-Netzknoten 41 und der GGSN-Netzknoten 42 sind ferner jeweils dazu ausgebildet, unter Auswertung der in der empfangenen GTP-Kontextanforderung enthaltenen Identifizierungsinformation, also beispielsweise dem Zugangspunkt-Name, die der GTP-Kontextanforderung bzw. dem Smartphone 20 zugeordnete Datenverkehrsklasse zu ermitteln. Im vorliegenden Beispiel sei deshalb angenommen, dass sowohl der SGSN-Netzknoten 41 als auch der GGSN-Netzknoten 42 die dritte Datenverkehrsklasse, also die Datenverkehrsklasse mit der höchsten anzunehmenden Datenlast, ermittelt haben. Ferner können die beiden Netzknoten 41 und 42 jeweils dazu ausgebildet, die von ihnen empfangene GTP-Kontextanforderung zumindest teilweise zusammen mit der dieser GTP-Kontextanforderung eindeutig zugeordnet Tunnel-Kennung, die zuvor der aufgebauten GTP Tunnelverbindung zugeordnet worden ist, als eine Datenverbindungs-Information bzw. als eine GTP Kontextinformation in Abhängigkeit von der ermittelten Datenverkehrsklasse bzw. der ihr zugeordneten Datenlast hierarchisch in der Speichereinrichtung 44 bzw. 47 zu speichern.

Angenommen sei, dass der SGSN-Netzknoten 41 dazu ausgebildet ist, in Schritt 6 eine GTP-Kontextannahme, die die Tunnel-Kennung, die der zuvor aufgebauten GTP-Tunnelverbindung zugeordnet worden ist, enthält, zum Smartphone 20 zu übertragen. Die Tunnel ID kann in der Speichereinrichtung 22 des Smartphones 20 abgelegt werden.

Angenommen sei nunmehr, dass eine Vielzahl von Datenverbindungsaufbau-Nachrichten bzw. GTP-Kontextanforderungen von Mobilfunk-fähigen Geräten, beispielsweise auch vom im Fahrzeug 80, erzeugt bzw. bereitgestellt werden und entsprechend der zuvor beschriebenen Schritte 1-6 verarbeitet worden sind. Hinsichtlich des Mobilfunk-fähigen Geräts 80 bedeutet das, dass der SGSN-Netzknoten 41 und der GGSN-Netzknoten 42 unter Ansprechen auf die vom Gerät 80 empfangene GTP-Kontextanforderung ermittelt haben, dass dieser GTP-Kontextanforderung bzw. dem Mobilfunk-fähigen Gerät 80 die zweite Datenverkehrsklasse zugeordnet worden ist. Als Ergebnis hiervon sei nun weiterhin angenommen, dass eine entsprechende Anzahl an Datenverbindungs-Informationen bzw. GTP Kontextinformationen zusammen mit der jeweiligen Tunnel ID in der Speichereinrichtung 44 des SGSN-Netzknotens 41 und in der Speichereinrichtung 47 des GGNS-Netzknoten 42 hierarchisch abgespeichert worden sind.

Eine beispielhafte hierarchische Speicherung von Datenverbindungs-Informationen in den Netzknoten 41 und 42 kann dadurch erreicht werden, dass den mehreren Datenverkehrsklassen, im vorliegenden Beispiel sind das die drei zuvor erläuterten Datenverkehrsklassen, unterschiedliche Schwellenwerte, die der jeweiligen zu erwartenden mittleren Datenlast entsprechen, zugeordnet worden sind, und dass den drei Datenverkehrsklassen in Abhängigkeit der ihnen zugeordneten Datenlast eine Speichertabelle mit entsprechender Priorität zugeordnet wird. Beispielsweise wird der ersten Datenverkehrsklasse mit der niedrigsten Datenlast bzw. dem niedrigsten Schwellenwert eine Speichertabelle mit der niedrigsten Priorität zugeordnet, der zweiten Datenverkehrsklasse mit der mittleren Datenlast bzw. dem mittleren Schwellenwert eine Speichertabelle mit der zweithöchsten Priorität zugeordnet, und dritten Datenverkehrsklasse mit der höchsten Datenlast bzw. dem höchsten Schwellenwert eine Speichertabelle mit der höchsten Priorität zugeordnet. In Figur 3 entspricht der Speichertabelle mit der niedrigsten Priorität die Tabelle IoT, der Speichertabelle mit der zweithöchsten Priorität die Tabelle M2M und der Speichertabelle mit der höchsten Priorität die Tabelle Massenmarkt. Dies bedeutet für den zuvor beispielhaft erläuterten Fall, dass die in Verbindung mit dem Smartphone 20 erzeugte Datenverbindungs-Information, wie in Figur 3 gezeigt, in der obersten, mit Priorität 1 gekennzeichneten Speichertabelle, und die in Verbindung mit dem Mobilfunk-fähigen Gerät 80 erzeugte Datenverbindungs-Information, wie in Figur 3 gezeigt, in der mittleren, mit Priorität 2 gekennzeichneten Speichertabelle der Speichereinrichtung 44 bzw. 47 gespeichert werden. Mit anderen Worten: die Netzknoten 41 und 42 sind jeweils dazu ausgebildet, in den Abhängigkeiten der ermittelten Datenverkehrsklassen und somit in Abhängigkeit der den jeweiligen ermittelten Datenverkehrsklassen zugeordneten Datenlasten die dazugehörenden Datenverbindungs-Informationen bzw. GTP-Kontextinformationen hierarchisch in den Speichereinrichtungen 44 bzw. 47 abzulegen.

Wir kehren nunmehr noch einmal zu dem in Figur 2 gezeigten Zeitdiagramm zurück. Sobald eine Datenverbindung zwischen dem Smartphone 20 und dem Datennetz 50 über das Mobilfunknetz 70 und insbesondere eine GTP-Tunnelverbindung zwischen dem SGSN-Netzknoten 41 und dem GGSN-Netzknoten 42 aufgebaut worden ist, kann das Smartphone 20 IP-basierte Nutzdatenpakete, insbesondere GTP-Nutzdatenpakete über das Mobilfunknetz 70, d. h. beispielsweise über die Basisstation 31, die Paket-Steuerungseinheit 33 und die beiden Netzknoten 41 und 42 zum Datennetz 50 übertragen. Anzumerken ist, dass in jedem vom Smartphone 20 bereitgestellten bzw. erzeugten GTP-Nutzdatenpaket die der GTP-Tunnelverbindungen zugeordnete Tunnel ID übertragen wird. Die Netzknoten 41 und 42 sind jeweils dazu ausgebildet, die in jedem empfangenen Nutzdatenpaket enthaltene Tunnel ID auszulesen und die hierarchisch in den Speichereinrichtungen 44 bzw. 47 gespeicherten Datenverbindungs-Informationen beginnend mit der Speichertabelle mit der höchsten Priorität so lange durch zu suchen, bis die in einer Datenverbindungs-Information enthaltene Tunnel ID mit der im jeweiligen Nutzdatenpaket enthaltene Tunnel ID übereinstimmt. Dieses Prozedere ist in Figur 3 schematisch illustriert. Dies bedeutet, dass die Durchsuchungszeit und Rechenintensität in den Netzknoten 41 und 42 und, wenn eingebunden, in Firewalls reduziert werden kann. Wie zuvor erläutert, ist die Datenverbindungs-Information, die dem Smartphone 20 zugeordnet ist, in der Speichertabelle "Massenmarkt" gespeichert worden, während die Datenverbindungs-Information, die dem Mobilfunk-fähigen Gerät 80 zugeordnet ist, in der Speichertabelle "M2M" gespeichert worden ist. Demzufolge wird die in einem Nutzdatenpaket des Smartphones 20 enthaltene Tunnel ID schneller gefunden als die in einem Nutzdatenpaket des Mobilfunk-fähigen Geräts 80 enthaltene Tunnel ID. wird. Denn wie in Figur 3 zu sehen, wird die Tunnel ID jedes empfangene Nutzdatenpaket, ungeachtet ob es der Datenverkehrsklasse "Massenmarkt", der Datenverkehrsklasse "M2M" oder der Datenverkehrsklasse "IoT" zugeordnet ist, mit jeder gespeicherten Nachrichtenverbindungs-Information beginnend mit der Speichertabelle mit der höchsten Priorität und endend mit der Speichertabelle mit der niedrigsten Speichertabelle solange verglichen, bis die Nachrichtenverbindungs-Information gefunden worden ist, deren Tunnel ID mit der in dem jeweiligen Nutzdatenpaket enthaltenen Tunnel ID übereinstimmt.

Um die Durchsuchung der in den Speichereinrichtungen 44 und 47 gespeicherten Datenverbindungs-Informationen noch effizienter zu gestalten, können die gespeicherten Datenverbindungs-Informationen beispielsweise in Abhängigkeit einer sich aktuell ändernden Verkehrssituation dynamisch in den Speichertabellen hin und her geschoben werden. Zu diesem Zweck kann das GPRS Kernnetz 40 und vorzugsweise die Netzknoten 41 und 42 dazu ausgebildet sein, jede aufgebaute GDP Tunnelverbindung während deren Laufzeit zu überwachen, indem beispielsweise die aktuelle Datenlast, d. h. das aktuelle Verkehrsaufkommen in jeder dieser GTP Tunnelverbindung vorzugsweise mehrmals, beispielsweise zyklisch überprüft wird. Ferner sind die Netzknoten 41 und 42 jeweils dazu ausgebildet, in Abhängigkeit von der aktuell ermittelten Datenlast zu prüfen, ob die der jeweiligen GDP-Tunnelverbindung zugeordnete Datenverbindungs-Information noch in der richtigen Speichertabelle steht, oder in eine Speichertabelle mit höherer oder niedrigerer Priorität verschoben werden soll. Nachfolgend werden einige beispielhafte Szenarien betrachtet, die zu einer Verschiebung einer Datenverbindungs-Information in den Speichereinrichtungen 44 und 47 führen kann.

Beispielhaft sei angenommen, dass für die hinsichtlich des Smartphones 20 aufgebauten GTP-Tunnelverbindung, der bisher der dritten Datenverkehrsklasse "Massenmarkt" und damit der Verkehrsklasse mit der höchsten Datenlast zugeordnet worden ist, eine aktuelle Datenlast ermittelt worden ist, die beispielsweise niedrigerer ist, als die zu erwartende mittlere Datenlast der zweiten Datenverkehrsklasse "M2M". In diesem Fall wird die dem Smartphone 20 beziehungsweise der dazugehörigen GDP-Tunnelverbindung zugeordnete Datenverbindungs-Information aus der Speichertabelle "Massenmarkt" in die Speichertabelle "M2M" der Speichereinrichtung 44 bzw. der Speichereinrichtung 47 verschoben.

In ähnlicher Weise kann z.B. eine Datenverbindungs-Information, die bisher in der Speichertabelle "M2M" gespeichert ist, in die Speichertabelle "loT" verschoben werden, sofern das GPRS Kernnetz 40 für die entsprechende GTP Tunnelverbindung, das kann die für das Mobilfunk-fähige Gerät 80 aufgebaute Tunnelverbindung sein, eine aktuelle Datenlast ermittelt hat, niedriger ist als die zu erwartende mittlere Datenlast der ersten Datenverkehrsklasse, welcher die niedrigste zu erwartende Datenlast zugeordnet worden ist. Hingegen kann eine Datenverbindungs-Information, welche bisher in der Speichertabelle "loT" gespeichert war, in die Speichertabelle "M2M" verschoben werden, sofern das GPRS Kernnetz 40 für die entsprechende GTP Tunnelverbindung eine Datenlast ermittelt hat, die höher ist als die zu erwartende mittlere Datenlast, welche der zweiten Datenverkehrsklasse M2M zugeordnet ist.

Die dem Smartphone 20 zugeordnete Datenverbindungs-Information, die in der Speichereinrichtung 44 und in der Speichereinrichtung 47 gespeichert ist, kann wieder gelöscht werden, wenn die Datenverbindung zwischen dem Smartphone 20 und dem Datennetz 50 bzw. die dieser Datenverbindung zugeordnete GTP Tunnelverbindung zwischen dem Netzknoten 41 und dem Netzknoten 42 aufgebaute Tunnelverbindung wieder abgebaut worden ist.

Dies kann dadurch erreicht werden, dass das Smartphone 20 dazu ausgebildet ist, unter Ausführung des GTP-Protokolls eine Datenverbindungsabbau-Nachricht, bzw. eine GTP-Kontextabbau-Nachricht zum Abbauen der in den Schritten vier und fünf aufgebauten Tunnelverbindung zu erzeugen und über die Basisstation 31 in das Kernnetz 40 bzw. zu den Netzknoten 41 und 42 zu übertragen. Unter Ansprechen auf die empfangene Datenverbindungsabbau-Nachricht baut das Kernnetz 40, und vorzugsweise die Netzknoten 41 und 42 die GTP Tunnelverbindung zwischen den beiden Netzknoten 41 und 42 ab. Die beiden Netzknoten 41 und 42 sind weiterhin jeweils dazu ausgebildet, die entsprechende Datenverbindungs-Information wieder zu löschen.

## Patentansprüche

1. Verfahren zum hierarchischen Speichern von Datenverbindungs-Informationen in Netzknoten (41, 42) eines Mobilfunknetzes (70), welches zur Übertragung von Datenpaketen gemäß einem IP-basierten Tunnel-Protokoll ausgebildet ist, mit folgenden Verfahrensschritten:
a) Festlegen mehrerer, verschiedener Datenverkehrsklassen;
b) Bereitstellen, von einem Mobilfunk-fähigen Gerät (20), unter Verwendung des IP-basierten Tunnel-Protokolls einer Datenverbindungsaufbau-Nachricht zum Aufbauen einer Datenverbindung über das Mobilfunknetz (70) zu einer mit dem Mobilfunknetz (70) verbindbaren Zieleinrichtung (50, 51), wobei die Datenverbindungsaufbau-Nachricht eine Information zum Identifizieren einer der mehreren Datenverkehrsklassen enthält;
c) Übertragen der in Schritt b) bereitgestellten Datenverbindungsaufbau-Nachricht in ein Kernnetz (40) des Mobilfunknetzes (70);
d) Aufbauen, durch das Kernnetz (70), unter Ansprechen auf die Datenverbindungsaufbau-Nachricht einer IP-basierten Tunnelverbindung zwischen einem ersten, dem Mobilfunk-fähigen Gerät (20) zugeordneten Netzknoten (41) des Kernnetzes (40) und einem zweiten, der Zieleinrichtung (50, 51) zugeordneten Netzknoten (42) des Kernnetzes (40);
e) Zuordnen, durch das Kernnetz (40), einer eindeutigen Tunnel-Kennung der in Schritt d) aufgebauten IP-basierten Tunnelverbindung;
f) Ermitteln, durch den ersten Netzknoten (41) und durch den zweiten Netzknoten (42), jeweils unter Auswertung der in der Datenverbindungsaufbau-Nachricht enthaltenen Identifizierungsinformation der der Datenverbindungsaufbau-Nachricht zugeordneten Datenverkehrsklasse;
g) hierarchisches Speichern, in dem ersten Netzknoten (41) und in dem zweiten Netzknoten (42), jeweils zumindest teilweise der Datenverbindungsaufbau-Nachricht und der in Schritt e) der IP-basierten Tunnelverbindung zugeordneten eindeutigen Tunnel-Kennung als eine Datenverbindungs-Information in Abhängigkeit von der in Schritt f) ermittelten Datenverkehrsklasse; und
h) Wiederholen der Schritte b) bis g) für wenigstens ein weiteres Mobilfunk-fähiges Gerät (80).

2. Verfahren nach Anspruch 1,
**dadurch gekennzeichnet, dass**
das IP-basierte Tunnel-Protokoll ein GPRS-Tunnel-Protokoll, GTP, ist,
dass die Datenverbindungs-Informationen GTP-Kontextinformationen sind, dass
der erste Netzknoten (41) und der zweite Netzknoten (42) jeweils als ein General Packet Radio Service, GPRS,-fähiger Netzknoten ausgebildet sind, und dass in Schritt d) eine IP-basierte Tunnelverbindung gemäß dem GPRS-Tunnel-Protokoll aufgebaut wird.

3. Verfahren nach Anspruch 2,
**dadurch gekennzeichnet, dass**
der erste Netzknoten (41) ein Serving GPRS Support Node, SGSN,-Netzknoten oder ein Serving Gateway, S-GW,-Netzknoten oder ein Mobility Management Entity, MME,-Netzknoten ist, und dass
der zweite Netzknoten (42) ein Gateway GPRS Support Node, GGSN,-Netzknoten oder ein Packet Data Network Gateway, P-GW,-Netzknoten ist.

4. Verfahren nach Anspruch 1, 2 oder 3,
**dadurch gekennzeichnet, dass**
die Information zum Identifizieren einer der mehreren Datenverkehrsklassen
einen Zugangspunkt-Name (Access Point Name, APN, eines GGSN und/oder P-GW) und/oder den Typ einer drahtlosen Zugangstechnologie (Radio Access Technology, RAT) und/oder eine internationale Mobilfunk-Teilnehmerkennung (International Mobile Subscriber Identity, IMSI) und/oder
eine Mobilfunk-Rufnummer (Mobile Subscriber Integrated Services Digital Network Number, MSISDN) enthält.

5. Verfahren nach einem der vorstehenden Ansprüche, **dadurch gekennzeichnet, dass** jeder der in Schritt a) bestimmten Datenverkehrsklassen eine unterschiedliche Datenlast zugeordnet wird, wobei die Datenlast die Anzahl von Datenpaketen pro Zeiteinheit definiert; dass
den mehreren Datenverkehrsklasse jeweils in Abhängigkeit von der ihnen zugeordneten Datenlast eine Speichertabelle mit entsprechender Priorität zugeordnet wird, und zwar in steigender Reihenfolge derart, dass der Datenverkehrsklasse mit der niedrigsten Datenlast die Speichertabelle mit der niedrigsten Priorität und der Datenverkehrsklasse mit der höchsten Datenlast die Speichertabelle mit der höchsten Priorität zugeordnet wird; dass in Schritt g) in dem ersten Netzknoten (41) und in dem zweiten Netzknoten (42) die Datenverbindungs-Information in Abhängigkeit von der in Schritt f) ermittelten Datenverkehrsklasse in der entsprechend priorisierten Speichertabelle gespeichert wird; dass
die in Schritt e) der IP-basierten Tunnelverbindung zugeordnete eindeutige Tunnel-Kennung zu dem Mobilfunk-fähigen Gerät (20) übertragen wird; dass wenn verfügbar, Nutzdatenpakete von jedem Mobilfunk-fähigen Gerät (20, 80) über die ihr zugeordnete, in Schritt d) aufgebaute IP-basierte Tunnelverbindung übertragen werden, wobei in jedem Nutzdatenpaket die Tunnel-Kennung der jeweiligen IP-basierten Tunnelverbindung, über die das jeweilige Nutzdatenpaket übertragen wird, enthalten ist, und dass
die in jedem empfangenen Nutzdatenpaket enthaltene Tunnel-Kennung vom ersten Netzknoten (41) und vom zweiten Netzknoten (42) ausgelesen wird und die in Schritt g) hierarchisch gespeicherten Datenverbindungs-Informationen vom ersten Netzknoten (41) und vom zweiten Netzknoten (42) beginnend mit der Speichertabelle mit der höchsten Priorität solange durchsucht werden, bis die in einer Datenverbindungs-Information enthaltene Tunnel-Kennung mit der im Nutzdatenpaket enthaltenen Tunnel-Kennung übereinstimmt.

6. Verfahren nach Anspruch 5,
**gekennzeichnet durch** folgende Schritte:
i) mehrmaliges Ermitteln, während der Laufzeit einer der in Schritt d) aufgebauten IP-basierten Tunnelverbindung, der aktuellen Datenlast dieser IP-basierten Tunnelverbindung;
ii) Verschieben der dieser IP-basierten Tunnelverbindung zugeordneten Datenverbindungs-Information, in dem ersten Netzknoten (41) und in dem zweiten Netzknoten (42), in Abhängigkeit von der ermittelten Datenlast in eine Speichertabelle mit höherer oder niedrigerer Priorität oder Nicht-Verschieben der dieser IP-basierten Tunnelverbindung zugeordneten Datenverbindungs-Information; und
iii) Wiederholen der Schritte i) und ii) für jede der in Schritt d) aufgebauten IP-basierten Tunnelverbindung.

7. Verfahren nach einem der vorstehenden Ansprüche,
**dadurch gekennzeichnet, dass**
die in Schritt a) bestimmten Datenverkehrsklassen
eine erste Datenverkehrsklasse enthalten, welche einer Internet-der-Dinge-Kommunikation zugeordnet ist,
eine zweite Datenverkehrsklasse enthalten, welche einer Maschine-zu-Maschine-Kommunikation zugeordnet ist, und
eine dritte Datenverkehrsklasse enthalten, welche einem Voice over IP, VoIP,- und/oder
Streaming-Dienst zugeordnet ist.

8. Telekommunikationssystem (10) umfassend:
ein Mobilfunknetz (70), welches ein Kernnetz (40) mit wenigstens einem ersten Netzknoten (41) und wenigstens einem zweiten Netzknoten (42) aufweist, wobei das Mobilfunknetz (70) zur Übertragung von Datenpaketen gemäß einem IP-basierten Tunnel-Protokoll ausgebildet ist, und
wenigstens ein Mobilfunk-fähiges Gerät (20, 80), welches eine Steuereinrichtung (21, 86) und eine Speichereinrichtung (22, 87), in der wenigstens eine Information zum Identifizieren einer von mehreren vorbestimmten Datenverkehrsklassen und ein IP-basiertes Tunnel-Protokoll gespeichert sind, aufweist,
wobei das wenigstens eine Mobilfunk-fähige Gerät (20, 80) dazu ausgebildet ist, unter Ausführung des IP-basierten Tunnel-Protokolls eine Datenverbindungsaufbau-Nachricht zum Aufbauen einer Datenverbindung über das Mobilfunknetz (70) zu einer mit dem Mobilfunknetz (70) verbindbaren Zieleinrichtung (50, 51) bereitzustellen und in das Kernnetz (70) zu übertragen,
wobei die Datenverbindungsaufbau-Nachricht die wenigstens eine Information zum Identifizieren einer der mehreren Datenverkehrsklassen enthält, wobei das Kernnetz (70) dazu ausgebildet ist, unter Ansprechen auf eine von dem wenigstens einen Mobilfunk-fähigen Gerät (20, 80) empfangene Datenverbindungsaufbau-Nachricht eine IP-basierte Tunnelverbindung zwischen dem ersten, dem wenigstens einen Mobilfunk-fähigen Gerät (20, 80) zugeordneten Netzknoten (41) und dem zweiten, der Zieleinrichtung (50, 51) zugeordneten Netzknoten (42) aufzubauen, der aufgebauten IP-basierten Tunnelverbindung eine eindeutige Tunnel-Kennung zuzuordnen, und die eindeutige Tunnel-Kennung zu dem wenigstens einen Mobilfunk-fähigen Gerät (20, 80) zu übertragen, wobei
der wenigstens eine erste Netzknoten (41) und der wenigstens eine zweite Netzknoten (42) jeweils eine Speichereinrichtung (44, 47) aufweisen und jeweils dazu ausgebildet sind,
- unter Auswertung der in einer empfangenen Datenverbindungsaufbau-Nachricht enthaltenen Identifizierungsinformation die der Datenverbindungsaufbau-Nachricht zugeordnete Datenverkehrsklasse zu ermitteln, und
- zumindest teilweise die Datenverbindungsaufbau-Nachricht zusammen mit der eindeutigen Tunnel-Kennung, die der aufgebauten IP-basierten Tunnelverbindung zugeordnet ist, als eine Datenverbindungs-Information in Abhängigkeit von der ermittelten Datenverkehrsklasse hierarchisch in der Speichereinrichtung (44) bzw. in der Speichereinrichtung (47) zu speichern.

9. Telekommunikationssystem nach Anspruch 8,
**dadurch gekennzeichnet, dass**
das IP-basierte Tunnel-Protokoll ein GPRS-Tunnel-Protokoll, GTP, ist,
dass die Datenverbindungs-Informationen GTP-Kontextinformationen sind, dass
der wenigstens eine erste Netzknoten (41) und der wenigstens eine zweite Netzknoten (42) jeweils als ein General Packet Radio Service, GPRS,-fähiger Netzknoten ausgebildet sind.

10. Telekommunikationssystem nach Anspruch 9,
**dadurch gekennzeichnet, dass**
der wenigstens eine erste Netzknoten (41) ein Serving GPRS Support Node, SGSN,-Netzknoten oder ein Serving Gateway,S-GW,-Netzknoten ist, und dass
der wenigstens eine zweite Netzknoten (42) ein Gateway GPRS Support Node, GGSN,-Netzknoten
oder ein Packet Data Network Gateway, P-GW,-Netzknoten ist.

11. Telekommunikationssystem nach einem der Ansprüche 8 bis 10,
**dadurch gekennzeichnet, dass**
die Information zum Identifizieren einer der mehreren Datenverkehrsklassen einen Zugangspunkt-Name (Access Point Name, APN, eines GGSN) und/oder
den Typ einer drahtlosen Zugangstechnologie (Radio Access Technology, RAT)
und/oder eine internationale Mobilfunk-Teilnehmerkennung (International Mobile Subscriber Identity, IMSI) und/oder eine Mobilfunk-Rufnummer (Mobile Subscriber Integrated Services Digital Network Number, MSISDN) enthält.

12. Telekommunikationssystem nach einem der Ansprüche 8 bis 11,
**dadurch gekennzeichnet, dass**
jeder der vorbestimmten Datenverkehrsklassen eine unterschiedliche Datenlast zugeordnet ist, wobei die Datenlast als Anzahl von Paketen pro Zeiteinheit definiert ist, dass
den mehreren vorbestimmten Datenverkehrsklasse in dem wenigstens einen ersten Netzknoten (41) und in dem wenigstens einen zweiten Netzknoten (42) in Abhängigkeit von der ihnen zugeordneten Datenlast jeweils eine Speichertabelle mit entsprechender Priorität zugeordnet ist, und zwar in steigender Reihenfolge derart, dass der Datenverkehrsklasse mit der niedrigsten Datenlast die Speichertabelle mit der niedrigsten Priorität und der Datenverkehrsklasse mit der höchsten Datenlast die Speichertabelle mit der höchsten Priorität zugeordnet ist, dass
der wenigstens eine erste Netzknoten (41) dazu ausgebildet ist, eine Datenverbindungs-Information in Abhängigkeit von der jeweils ermittelten Datenverkehrsklasse in der entsprechend priorisierten Speichertabelle der Speichereinrichtung (44) zu speichern, und dass
der wenigstens eine zweite Netzknoten (42) dazu ausgebildet sind, eine Datenverbindungs-Information in Abhängigkeit von der jeweils ermittelten Datenverkehrsklasse in der entsprechend priorisierten Speichertabelle der Speichereinrichtung (47) zu speichern.

13. Telekommunikationssystem nach Anspruch 12,
**dadurch gekennzeichnet, dass**
das Mobilfunknetz (70) dazu ausgebildet ist, während der Laufzeit einer aufgebauten IP-basierten Tunnelverbindung deren aktuelle Datenlast zu ermitteln, und dass
der wenigstens eine erste Netzknoten (41) und der wenigstens eine zweite Netzknoten (42) jeweils dazu ausgebildet sind, die dieser IP-basierten Tunnelverbindung zugeordnete, gespeicherte Datenverbindungs-Information in Abhängigkeit von der ermittelten aktuellen Datenlast in eine Speichertabelle mit höherer oder niedrigerer Priorität zu verschieben oder nicht zu verschieben.

14. Telekommunikationssystem nach Anspruch 12 oder 13,
**dadurch gekennzeichnet, dass**
das wenigstens eine Mobilfunk-fähige Gerät (20, 80) dazu ausgebildet ist, Nutzdatenpakete zur Übertragung über die aufgebaute IP-basierte Tunnelverbindung bereitzustellen, wobei in jedem Nutzdatenpaket die Tunnel-Kennung der IP-basierten Tunnelverbindung, über die die Übertragung des jeweiligen Nutzdatenpaket erfolgen soll, enthalten ist,
und dass
der wenigstens eine erste Netzknoten (41) und der wenigstens eine zweite Netzknoten (42) jeweils dazu ausgebildet sind, die in jedem empfangenen Nutzdatenpaket enthaltene Tunnel-Kennung auszulesen und die hierarchisch gespeicherten Datenverbindungs-Informationen beginnend mit der Speichertabelle mit der höchsten Priorität solange durchzusuchen, bis die in einer Datenverbindungs-Information enthaltene Tunnel-Kennung mit der im jeweiligen Nutzdatenpaket enthaltenen Tunnel-Kennung übereinstimmt.

15. Telekommunikationssystem nach einem der Ansprüche 8 bis 14,
**dadurch gekennzeichnet, dass**
das wenigstens eine Mobilfunk-fähige Gerät (20, 80) Kraftfahrzeug, oder ein Sensor, oder ein Mobilfunk-fähiges Endgerät, insbesondere ein Smartphone, oder ein tragbarer Rechner oder ein Router ist.

## Claims

1. A method for hierarchically storing data connection information in network nodes (41, 42) of a mobile radio network (70) which is designed to transmit data packets in accordance with an IP-based tunnel protocol, comprising the following method steps:
a) defining a plurality of different data traffic classes;
b) providing, by a mobile radio-capable device (20), using the IP-based tunnel protocol a data connection establishment message for establishing a data connection via the mobile radio network (70) to a destination device (50, 51) connectable to the mobile radio network (70), the data connection establishment message containing information for identifying one of the plurality of data traffic classes;
c) transmitting the data connection establishment message provided in step b) to a core network (40) of the mobile radio network (70);
d) establishing, by the core network (70), in response to the data connection establishment message an IP-based tunnel connection between a first network node (41) of the core network (40) associated with the mobile radio-capable device (20) and a second network node (42) of the core network (40) associated with the destination device (50, 51);
e) assigning, by the core network (40), a unique tunnel identifier of the IP-based tunnel connection established in step d);
f) determining, by the first network node (41) and by the second network node (42), in each case by evaluating the identification information contained in the data connection establishment message the data traffic class assigned to the data connection establishment message;
g) hierarchically storing, in the first network node (41) and in the second network node (42), each at least partially the data connection establishment message and the unique tunnel identifier assigned to the IP-based tunnel connection in step e) as a data connection information depending on the data traffic class determined in step f); and
h) repeating steps b) to g) for at least one further mobile radio-capable device (80).

2. The method according to claim 1,
**characterized in that**
the IP-based tunnel protocol is a GPRS tunnel protocol, GTP,
that the data connection information is GTP context information, **in that** the first network node (41) and the second network node (42) are each designed as a General Packet Radio Service, GPRS, capable network node, and **in that** an IP-based tunnel connection is established in accordance with the GPRS tunnel protocol in step d).

3. The method according to claim 2,
**characterized in that**
the first network node (41) is a Serving GPRS Support Node, SGSN, network node or a Serving Gateway, S-GW, network node or a Mobility Management Entity, MME, network node, and **in that**
the second network node (42) is a Gateway GPRS Support Node, GGSN, network node or a Packet Data Network Gateway, P-GW, network node.

4. The method according to claim 1, 2 or 3,
**characterized in that**
the information for identifying one of the plurality of data traffic classes contains an access point name Access Point Name, APN of a GGSN and/or P-GW) and/or the type of a wireless access technology (Radio Access Technology, RAT)) and/or an international mobile subscriber identity (IMSI) and/or a mobile call number (Mobile Subscriber Integrated Services Digital Network Number, MSISDN).

5. The method according to any one of the preceding claims,
**characterized in that**
a different data load is assigned to each of the data traffic classes defined in step a), the data load defining the number of data packets per time unit; **in that** the plurality of data traffic classes are each assigned a memory table with a corresponding priority in dependence of the data load assigned to them, in ascending order such that the data traffic class with the lowest data load is assigned the memory table with the lowest priority and the data traffic class with the highest data load is assigned the memory table with the highest priority; **in that**
in step g), in the first network node (41) and in the second network node (42), the data connection information is stored in the correspondingly prioritized memory table in dependence of the data traffic class determined in step f); **in that**
the unique tunnel identifier assigned to the IP-based tunnel connection in step e) is transmitted to the mobile radio-capable device (20); **in that**,
if available, payload packets are transmitted from each mobile radio-capable device (20, 80) via the IP-based tunnel connection assigned to it and established in step d), each payload packet containing the tunnel identifier of the respective IP-based tunnel connection via which the respective payload packet is transmitted, and **in that**
the tunnel identifier contained in each received payload packet is read out by the first network node (41) and by the second network node (42) and the data connection information stored hierarchically in step g) is searched by the first network node (41) and by the second network node (42), starting with the memory table with the highest priority, until the tunnel identifier contained in a data connection information matches the tunnel identifier contained in the payload packet.

6. The method according to claim 5,
**characterized by** the following steps:
i) determining several times, during the runtime of one of the IP-based tunnel connections established in step d), the current data load of this IP-based tunnel connection;
ii) shifting the data connection information associated with this IP-based tunnel connection, in the first network node (41) and in the second network node (42), in dependence of the determined data load into a memory table with higher or lower priority or not shifting the data connection information associated with this IP-based tunnel connection; and
iii) repeating steps i) and ii) for each of the IP-based tunnel connections established in step d).

7. The method according to any one of the preceding claims,
**characterized in that**
the data traffic classes defined in step a) comprise a first data traffic class which is assigned to an Internet-of-Things communication,
a second data traffic class which is assigned to a machine-to-machine communication, and
a third data traffic class which is assigned to a Voice over IP,VoIP, and/or a streaming service.

8. A telecommunication system (10) comprising:
a mobile radio network (70), which comprises a core network (40) with at least one first network node (41) and at least one second network node (42), the mobile radio network (70) being designed to transmit data packets in accordance with an IP-based tunnel protocol, and
at least one mobile radio-capable device (20, 80), which has a control device (21, 86) and a memory device (22, 87), in which at least information for identifying one of a plurality of predetermined data traffic classes and an IP-based tunnel protocol are stored, wherein
the at least one mobile radio-capable device (20, 80) is designed to provide and transmit into the core network (70) a data connection establishment message for establishing a data connection via the mobile network (70) to a destination device (50, 51) connectable to the mobile network (70) by executing the IP-based tunnel protocol, the data connection establishment message including the at least one information for identifying one of the plurality of data traffic classes,
wherein
the core network (70) is designed to establish in response to a data connection establishment message received from the at least one mobile-capable device (20, 80), the core network (70) an IP-based tunnel connection between the first network node (41) associated with the at least one mobile radio-capable device (20, 80) and the second network node (42) associated with the destination device (50, 51), assigning a unique tunnel identifier to the established IP-based tunnel connection, and transmitting the unique tunnel identifier to the at least one mobile radio-capable device (20, 80), wherein
the at least one first network node (41) and the at least one second network node (42) each have a memory device (44, 47) and are each designed to
- determine the data traffic class assigned to the data connection setup message by evaluating the identification information contained in a received data connection setup message, and
- store at least partially the data connection establishment message together with the unique tunnel identifier assigned to the established IP-based tunnel connection as data connection information hierarchically in the memory device (44) or in the memory device (47) depending on the determined data traffic class.

9. The telecommunications system according to claim 8, **characterized in that**
the IP-based tunnel protocol is a GPRS tunnel protocol, GTP,
**in that** the data connection information is GTP context information,
**in that**
the at least one first network node (41) and the at least one second network node (42) are each designed as a General Packet Radio Service, GPRS,-capable network node.

10. The telecommunication system according to claim 9,
**characterized in that**
the at least one first network node (41) is a Serving GPRS Support Node, SGSN,
network node or a Serving Gateway, S-GW, network node, and **in that** the at least one second network node (42) is a Gateway GPRS Support Node, GGSN, network node or a Packet Data Network Gateway, P-GW network node.

11. The telecommunication system according to any one of claims 8 to 10,
**characterized in that**
the information for identifying one of the plurality of data traffic classes includes an access point name (Access Point Name, APN, of a GGSN) and/or the type of a wireless access technology (Radio Access Technology, RAT) and/or an international mobile subscriber identity (International Mobile Subscriber Identity, IMSI) and/or a mobile radio call number (Mobile Subscriber Integrated Services Digital Network Number, MSISDN).

12. The telecommunications system according to any one of claims 8 to 11,
**characterized in that**
each of the predetermined data traffic classes is assigned a different data load, the data load being defined as the number of packets per time unit, **in that** the plurality of predetermined data traffic classes in the at least one first network node (41) and in the at least one second network node (42) are each assigned a memory table with a corresponding priority in dependence of the data load assigned to them, in ascending order such that the memory table with the lowest priority is assigned to the data traffic class with the lowest data load and the memory table with the highest priority is assigned to the data traffic class with the highest data load, that
the at least one first network node (41) is designed to store data connection information in dependence of the respectively determined data traffic class in the correspondingly prioritized memory table of the memory device (44), and **in that** the at least one second network node (42) is designed to store data connection information in dependence of the respectively determined data traffic class in the correspondingly prioritized memory table of the memeory device (47).

13. The telecommunications system according to claim 12,
**characterized in that**
the mobile radio network (70) is designed to determine the current data load of an established IP-based tunnel connection during the runtime of the connection, and **in that**
the at least one first network node (41) and the at least one second network node (42) are each designed to shift or not to shift the stored data connection information assigned to this IP-based tunnel connection into a memory table with a higher or lower priority in dependence of the determined current data load.

14. The telecommunications system according to claim 12 or 13,
**characterized in that**
the at least one mobile radio-capable device (20, 80) is designed to provide pay load data packets for transmission via the established IP-based tunnel connection, wherein the tunnel identifier of the IP-based tunnel connection via which the transmission of the respective pay load data packet is to take place, is included in each pay load data packet, and **in that**
the at least one first network node (41) and the at least one second network node (42) are each designed to read out the tunnel identifier contained in each received pay load data packet and to search through the hierarchically stored data connection information, starting with the memory table with the highest priority, until the tunnel identifier contained in a data connection information matches the tunnel identifier contained in the respective pay load data packet.

15. The telecommunication system according to any one of claims 8 to 14,
**characterized in that**
the at least one mobile radio-capable device (20, 80) is a motor vehicle, or a sensor, or a mobile radio-capable terminal, in particular a smartphone, or a portable computer or a router.

## Revendications

1. Procédé de stockage hiérarchique d'informations de connexion de données dans des noeuds de réseau (41, 42) d'un réseau de radiotéléphonie (70), lequel est réalisé pour transmettre des paquets de données selon un protocole de tunnel basé sur IP,
avec des étapes de procédé suivantes :
a) de fixation de plusieurs classes de trafic de données différentes ;
b) de fourniture, à partir d'un appareil compatible avec la radiotéléphonie (20), en utilisant le protocole de tunnel basé sur IP, d'un message d'établissement de connexion de données pour établir une connexion de données par l'intermédiaire du réseau de radiotéléphonie (70) vers un dispositif cible (50, 51) pouvant être connecté au réseau de radiotéléphonie (70), dans lequel le message d'établissement de connexion de données contient une information destinée à identifier une des plusieurs classes de trafic de données ;
c) de transmission du message d'établissement de connexion de données fourni à l'étape b) dans un réseau central (40) du réseau de radiotéléphonie (70) ;
d) d'établissement, par le réseau central (70), en réponse au message d'établissement de connexion de données d'une connexion de tunnel à base d'IP, entre un premier noeud de réseau (41), associé à l'appareil compatible avec le réseau de radiotéléphonie (20), du réseau central (40) et un deuxième noeud de réseau (42), associé au dispositif cible (50, 51), du réseau central (40) ;
e) d'association, par le réseau central (40), d'un identifiant de tunnel unique à la connexion de tunnel basée sur IP établie lors de l'étape d) ;
f) de détermination, par le premier noeud de réseau (41) et par le deuxième noeud de réseau (42), respectivement en évaluant l'information d'identification contenue dans le message d'établissement de connexion de données, de la classe de trafic de données associée au message d'établissement de connexion de données ;
g) de stockage hiérarchique, dans le premier noeud de réseau (41) et dans le deuxième noeud de réseau (42), respectivement au moins en partie du message d'établissement de connexion de données et de l'identifiant de tunnel unique associé à la connexion de tunnel basée sur IP lors de l'étape e) en tant qu'une information de connexion de données en fonction de la classe de trafic de données déterminée lors de l'étape f) ; et
h) de répétition des étapes b) à g) pour au moins un autre appareil compatible avec la radiotéléphonie (80).

2. Procédé selon la revendication 1, **caractérisé en ce que**
le protocole de tunnel basé sur IP est un protocole de tunnel GPRS (GTP),
que les informations de connexion de données sont des informations de contexte GTP, que
le premier noeud de réseau (41) et le deuxième noeud de réseau (42) sont réalisés respectivement en tant qu'un noeud de réseau compatible avec le service GPRS [General Packet Radio Service - service général de radiocommunication en mode paquet], et que
lors de l'étape d), une connexion de tunnel basée sur IP est établie selon le protocole de tunnel GPRS.

3. Procédé selon la revendication 2,
**caractérisé en ce que**
le premier noeud de réseau (41) est un noeud de réseau SGSN [Serving GPRS Support Node] ou un noeud de réseau S-GW [Serving Gateway] ou un noeud de réseau MME [Mobility Management Entity], et que
le deuxième noeud de réseau (42) est un noeud de réseau GGSN [Gateway GPRS Support Node] ou un noeud de réseau P-GW [Packet Data Network Gateway].

4. Procédé selon la revendication 1, 2 ou 3,
**caractérisé en ce que**
l'information destinée à identifier une des plusieurs classes de trafic de données contient un nom de point d'accès APN [Access Point Name] d'un GGSN et/ou d'un P-GW et/ou le type d'une technologie d'accès sans fil RAT [Radio Access Technology],
et/ou contient un identifiant d'abonné de radiotéléphonie international IMSI [International Mobile Subscriber Identity] et/ou un numéro d'appel de radiotéléphonie MSISDN [Mobile Subscriber Integrated Services Digital Network Number].

5. Procédé selon l'une quelconque des revendications précédentes, **caractérisé en ce que**
une charge de données différente est associée à chacune des classes de trafic de données définies lors de l'étape a), dans lequel la charge de données définit le nombre de paquets de données par unité de temps ; que
un tableau de stockage avec une priorité correspondante est associé aux plusieurs classes de trafic de données respectivement en fonction de la charge de données qui leur est associée, à savoir dans un ordre croissant de telle manière que le tableau de stockage avec la priorité la plus basse est associé à la classe de trafic de données avec la charge de données la plus basse et le tableau de stockage avec la priorité la plus élevée est associé à la classe de trafic de données avec la charge de données la plus élevée ; que
lors de l'étape g), l'information de connexion de données est stockée dans le premier noeud de réseau (41) et dans le deuxième noeud de réseau (42) en fonction de la classe de trafic de données déterminée lors de l'étape f) dans le tableau de stockage priorisé de manière correspondante ; que
l'identifiant de tunnel unique associé lors de l'étape e) à la connexion de tunnel basée sur IP est transmis à l'appareil compatible avec la radiotéléphonie (20) ; que si disponibles, des paquets de données utiles sont transmis depuis chaque appareil compatible avec la radiotéléphonie (20, 80) par l'intermédiaire de la connexion de tunnel basé sur IP, qui lui est associée, établie lors de l'étape d), dans lequel l'identifiant de tunnel de la connexion de tunnel respective basée sur IP, par l'intermédiaire de laquelle le paquet de données utiles respectif est transmis, est contenu dans chaque paquet de données utiles, et que
l'identifiant de tunnel contenu dans chaque paquet de données utiles reçu est lu par le premier noeud de réseau (41) et par le deuxième noeud de réseau (42) et
les informations de connexion de données stockées hiérarchiquement lors de l'étape g) du premier noeud de réseau (41) et du deuxième noeud de réseau (42) sont examinées en commençant par le tableau de stockage avec la priorité la plus élevée jusqu'à ce que l'identifiant de tunnel contenu dans une information de connexion de données concorde avec l'identifiant de tunnel contenu dans le paquet de données utiles.

6. Procédé selon la revendication 5,
**caractérisé par** des étapes suivantes :
i) de détermination à multiples reprises, pendant la durée de fonctionnement d'une connexion de tunnel basée sur IP établie lors de l'étape d), de la charge de données actuelle de ladite connexion de tunnel basée sur IP :
ii) de déplacement de l'information de connexion de données associée à ladite connexion de tunnel basée sur IP, dans le premier noeud de réseau (41) et dans le deuxième noeud de réseau (42), en fonction de la charge de données déterminée dans un tableau de stockage avec une priorité plus élevée ou plus basse ou de non-déplacement de l'information de connexion de données associée à ladite connexion de tunnel basée sur IP ; et
iii) de répétition des étapes i) et ii) pour chaque connexion de tunnel basée sur IP établie lors de l'étape d).

7. Procédé selon l'une quelconque des revendications précédentes,
**caractérisé en ce que**
les classes de trafic de données définies lors de l'étape a) contiennent une première classe de trafic de données, laquelle est associée à une communication Internet des objets,
contiennent une deuxième classe de trafic de données, laquelle est associée à une communication de machine à machine, et
contiennent une troisième classe de trafic de données, laquelle est associée à un service VoIP (Voice over IP] et/ou à un service de streaming.

8. Système de télécommunication (10) comprenant :
un réseau de radiotéléphonie (70), lequel présente un réseau central (40) avec au moins un premier noeud de réseau (41) et au moins un deuxième noeud de réseau (42), dans lequel le réseau de radiotéléphonie (70) est réalisé pour transmettre des paquets de données selon un protocole de tunnel basé sur IP, et
au moins un appareil compatible avec la radiotéléphonie (20, 80), lequel présente un dispositif de commande (21, 86) et un dispositif de stockage (22, 87), dans lequel au moins une information destinée à identifier une de plusieurs classes de trafic de données prédéfinies et un protocole de tunnel basé sur IP sont stockés,
dans lequel l'au moins un appareil compatible avec la radiotéléphonie (20, 80) est réalisé pour fournir, en exécutant le protocole de tunnel basé sur IP, un message d'établissement de connexion de données destiné à établir une connexion de données par l'intermédiaire du réseau de radiotéléphonie (70) vers un dispositif cible (50, 51) pouvant être connecté au réseau de radiotéléphonie (70) et le transmettre dans le réseau central (70), dans lequel le message d'établissement de connexion de données contient l'au moins une information destinée à identifier une des plusieurs classes de trafic de données, dans lequel le réseau central (70) est réalisé pour établir, en réponse à un message d'établissement de connexion de données reçu par l'au moins un appareil compatible avec la radiotéléphonie (20, 80), une connexion de tunnel basée sur IP entre le premier noeud de réseau (41) associé à l'au moins un appareil compatible avec la radiotéléphonie (20, 80) et le deuxième noeud de réseau (42) associé au dispositif cible (50, 51), pour associer un identifiant de tunnel unique à la connexion de tunnel basée sur IP établie et pour transmettre l'identifiant de tunnel unique à l'au moins un appareil compatible avec la radiotéléphonie (20, 80), dans lequel
l'au moins un premier noeud de réseau (41) et l'au moins un deuxième noeud de réseau (42) présentent respectivement un dispositif de stockage (44, 47) et sont réalisés respectivement
- pour déterminer, en analysant l'information d'identification contenue dans un message d'établissement de connexion de données reçu, la classe de trafic de données associée au message d'établissement de connexion de données, et
- pour stocker au moins en partie le message d'établissement de connexion de données conjointement avec l'identifiant de tunnel unique, qui est associé à la connexion de tunnel basée sur IP établie, en tant qu'une information de connexion de données en fonction de la classe de trafic de données déterminée de manière hiérarchique dans le dispositif de stockage (44) ou dans le dispositif de stockage (47).

9. Système de télécommunication selon la revendication 8,
**caractérisé en ce que**
le protocole de tunnel basé sur IP est un protocole de tunnel GPRS (GTP),
que les informations de connexion de données sont des informations de contexte GTP,
que l'au moins un premier noeud de réseau (41) et l'au moins un deuxième noeud de réseau (42) sont réalisés respectivement en tant qu'un noeud de réseau compatible avec GPRS.

10. Système de télécommunication selon la revendication 9,
**caractérisé en ce que**
l'au moins un premier noeud de réseau (41) est un noeud de réseau SGSN,
ou est un noeud de réseau S-GW, et
que l'au moins un deuxième noeud de réseau (42) est un noeud de réseau GGSN
ou est un noeud de réseau P-GW.

11. Système de télécommunication selon l'une quelconque des revendications 8 à 10,
**caractérisé en ce que**
l'information destinée à identifier une des plusieurs classes de trafic de données contient
un nom de point d'accès APN d'un GGSN et/ou
le type d'une technologie d'accès sans fil (RAT)
et/ou un identifiant d'abonné de radiotéléphonie international (IMSI),
et/ou un numéro d'appel de radiotéléphonie (MSISDN).

12. Système de télécommunication selon l'une quelconque des revendications 8 à 11,
**caractérisé en ce que**
une charge de données différente est associée à chacune des classes de trafic de données prédéfinies, dans lequel la charge de données est définie en tant que nombre de paquets par unité de temps, que
un tableau de stockage avec une priorité correspondante est associé respectivement aux plusieurs classes de trafic de données prédéfinies dans l'au moins un premier noeud de réseau (41) et dans l'au moins un deuxième noeud de réseau (42) en fonction de la charge de données qui leur est associée, à savoir dans un ordre croissant de telle manière que le tableau de stockage avec la priorité la plus basse est associé à la classe de trafic de données avec la charge de données la plus basse et le tableau de stockage avec la priorité la plus élevée est associé à la classe de trafic de données avec la charge de données la plus élevée,
que l'au moins un premier noeud de réseau (41) est réalisé pour stocker une information de connexion de données en fonction de la classe de trafic de données respectivement déterminée dans le tableau de stockage priorisé de manière correspondante du dispositif de stockage (44), et
que l'au moins un deuxième noeud de réseau (42) est réalisé pour stocker une information de liaison de données en fonction de la classe de trafic de données respectivement déterminée dans le tableau de stockage priorisé de manière correspondante du dispositif de stockage (47).

13. Système de télécommunication selon la revendication 12,
**caractérisé en ce que**
le réseau de radiotéléphonie (70) est réalisé pour déterminer pendant la durée de fonctionnement d'une connexion de tunnel basée sur IP établie sa charge de données actuelle, et que
l'au moins un premier noeud de réseau (41) et l'au moins un deuxième noeud de réseau (42) sont réalisés pour déplacer ou non l'information de connexion de données stockée associée à ladite connexion de tunnel basée sur IP en fonction de la charge de données actuelle déterminée dans un tableau de stockage avec une priorité plus élevée ou plus basse.

14. Système de télécommunication selon la revendication 12 ou 13,
**caractérisé en ce que**
l'au moins un appareil compatible avec la radiotéléphonie (20, 80) est réalisé
pour fournir des paquets de données utiles pour la transmission par l'intermédiaire de la connexion de tunnel basée sur IP établie, dans lequel l'identifiant de tunnel de la connexion de tunnel basée sur IP, par l'intermédiaire de laquelle la transmission du paquet de données utiles respectif doit avoir lieu, est contenu dans chaque paquet de données utiles,
et que
l'au moins un premier noeud de réseau (41) et l'au moins un deuxième noeud de réseau (42) sont réalisés respectivement pour lire l'identifiant de tunnel contenu dans chaque paquet de données utiles reçu et pour parcourir les informations de connexion de données stockées de manière hiérarchique en commençant par le tableau de stockage avec la priorité la plus élevée jusqu'à ce que l'identifiant de tunnel contenu dans une information de connexion de données concorde avec l'identifiant de tunnel contenu dans le paquet de données utiles respectif.

15. Système de télécommunication selon l'une quelconque des revendications 8 à 14,
**caractérisé en ce que**
l'au moins un appareil compatible avec la radiotéléphonie (20, 80) est un véhicule à moteur, ou un capteur ou un terminal compatible avec la radiotéléphonie, en particulier un téléphone intelligent, ou un ordinateur portatif ou un routeur.
